(19) **Europäisches Patentamt**
**European Patent Office**
**Office européen des brevets**

(11) **EP 3 961 557 A1**

(12) ## EUROPÄISCHE PATENTANMELDUNG

(43) Veröffentlichungstag:
**02.03.2022 Patentblatt 2022/09**

(21) Anmeldenummer: **20192906.4**

(22) Anmeldetag: **26.08.2020**

(51) Internationale Patentklassifikation (IPC):
**G06T 7/00** *(2017.01)* **B22F 10/85** *(2021.01)*
**B29C 64/393** *(2017.01)* **B33Y 50/02** *(2015.01)*

(52) Gemeinsame Patentklassifikation (CPC):
**G06T 7/001; B22F 10/38; B22F 10/85; B22F 12/90;**
**B29C 64/393; B33Y 50/02;** B22F 10/14;
B22F 10/28; B29C 64/153; B33Y 10/00;
G06T 2207/20016; G06T 2207/20021;
G06T 2207/30144

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Otte, Clemens**
**81739 München (DE)**
• **Eriksson, Jonas**
**61294 Finspong (SE)**
• **Graichen, Andreas**
**60211 Norrköping (SE)**

(54) **QUALITÄTSINSPEKTIONSVERFAHREN UND ANORDNUNG FÜR EINE QUALITÄTSINSPEKTION**

(57) Die Erfindung betrifft ein Qualitätsinspektionsverfahren für ein dreidimensionales Drucken, wie beispielsweise gemäß dem so genanntem "Additiv Manufacturing" Verfahren, bei dem ein dreidimensionales Druckobjekt derart erzeugt wird, dass das Druckobjekt virtuell in Schichten unterteilt wird und sukzessive aufeinanderfolgende Schichten des Druckmodels durch den Drucker derart gedruckt werden, dass hierzu je Schicht gemäß zu druckender virtueller Schicht eine Neubeschichtung mit einem Pulver erfolgt, die Neubeschichtung, insbesondere mit einem Laser, Klebstoff oder Elektronenstrahl, fixiert wird, bei dem je Schicht mindestens eine erste digitale Bildaufnahme der fixierten Schicht erzeugt wird, mindestens eine zweite digitale Bildaufnahme der Neubeschichtung erzeugt wird, mindestens eine virtuelle Aufteilung der ersten Bildaufnahme und mindestens eine virtuelle Aufteilung der zweiten Bildaufnahme derart erfolgt, dass die erste Bildaufnahme und die zweite Bildaufnahme jeweils derart in Teilflächen unterteilt werden, dass alle Teilflächen je Bildaufnahme zumindest einmal die gesamte Bildaufnahme abdecken, und die erste Aufteilung derart erfolgt, dass eine Teilfläche der ersten Bildaufnahme einer Teilfläche der zweiten Bildaufnahme in Position und Dimension sowie die Summe der Teilfläche der ersten Bildaufnahme der Summe der Teilfläche der zweiten Bildaufnahme entspricht, auf Grundlage einer durch gleiche Position und gleiche Dimension bestimmten Teilfläche der ersten Bildaufnahme und einer durch die gleiche Position und gleiche Dimension bestimmten Teilfläche der zweiten Bildaufnahme eine Untersuchung derart erfolgt, dass sie einer, insbesondere durch maschinelles Lernen unterstützter, Korrelation und Aggregation unterzogen werden, die Korrelation und Aggregation zumindest für jedes sich durch gleiche Position und gleiche Dimension definierende Paar von Teilflächen der ersten Bildaufnahme und der zweiten Bildaufnahme wiederholt wird, wobei die Position jedes weiteren Paares von Teilflächen sukzessive in x- und/oder y-Richtung gemäß eines kartesischen Koordinatensystem verschoben wird, ein Fehlerverfahren eingeleitet wird, wenn ein Defekt auf der aktuellen Schicht auf Grundlage zumindest einer durchgeführten Korrelation und/oder Aggregation signalisiert wird. Ferner betrifft die Erfindung eine Anordnung für eine Qualitätsinspektion zur Durchführung des Verfahrens.

**S1** → Erste Aufnahme der aktuell belichteten Druckschicht

**S2** → Zweite Aufnahme der zugehörigen Neubeschichtung

**S3** → Jeweils virtuelles Aufteilen der ersten und zweiten Aufnahme in Blöcke

**S4** → Bilden eines ersten virtuellen Zellenpaares gleicher Position und Dimension in einem Block mit vielfacher Dimension

**S5** → Bilden von zweiten virtuellen Zellenpaaren gleicher Position durch Verschieben in x-Richtung

**S6** → Bilden von dritten virtuellen Zellenpaaren gleicher Position durch Verschieben in y- Richtung

**S7** → Blockende erreicht? — Nein

Ja ↓

**S8** → Korrelation der Zellenpaare

**S9** → Aggregation der Zellenpaare

Ja ↓

**S10** → Klassifizierung des Blocks

**S11** → Letzter Block ? — Nein

**S12** → Ja ↓ Ende

# FIG 3

**Beschreibung**

Die Erfindung betrifft ein Qualitätsinspektionsverfahren gemäß dem Anspruch 1 und eine Anordnung für eine Qualitätsinspektion gemäß dem Anspruch 10.

Es ist bekannt, dass "Additive Manufacturing-Maschinen", so genannte "3D-Drucker", in der Regel Kameras zur Überwachung des Schicht-für-Schicht-Druckprozesses verwenden. Dies erfolgt insbesondere im Bereich des Metalldrucks, beispielsweise beim Einsatz des so genannten "Selective Laser Melting" oder des so genannten Sanddrucks, wie beispielsweise dem so genannten "Binder Jetting".

Dabei wird in der Regel die Qualität der jeweiligen Neubeschichtung üblicherweise durch eine Pulverbettkamera überwacht, die zur Erkennung fehlender oder inhomogener Pulverstreuung verwendet wird.

Es gibt viele Ansätze, die versuchen, Defekte auf der Basis von Einzelbildern zu erkennen, die typischerweise nach einer Neubeschichtung aufgenommen werden. Die folgenden beiden Referenzen sind gute Beispiele für diesen Ansatz:

Luke Scime, Jack Beuth, Anomaly detection and classification in a laser powder bed additive manufacturing process using a trained computer vision algorithm, Additive Manufacturing, Volume 19, 2018, Pages 114-126, ISSN 2214-8604.

EP 3 459 715 A1, die eine Vorhersage von Nachbeschichtungsproblemen bei der Laser-Pulverbettschmelze betrifft.

Diese Lösungen funktionieren, da in vielen Fällen ein Defekt anhand eines einzigen Bildes der jeweiligen Schicht deutlich zu erkennen ist. Ihre Zuverlässigkeit hat aber Grenzen, denn es gibt auch Fälle, in denen der Defekt anhand eines einzigen Bildes viel schwieriger zu erkennen ist und sie keine oder falsche Fehlerdetektionen liefern.

Eine Verbesserung hierzu versucht die WO 2015/020939 A1, welche einen Vergleich zwischen einem Kamerabild und einem Rendering zur Detektion heranzieht. Das Rendering wird dabei von einem so genannten "Slicer" aus einem CAD-Modell erzeugt.

Auch die Verwendung eines Rendering weist weiterhin mit der reinen Einzelbildverwendung Nachteile auf, da mit dem Rendering lediglich eine "abstrakte" Darstellung gegeben, welche die Nachteile der schwierigeren Fehlerdetektion anhand eines Einzelbildes nicht zufriedenstellend beheben kann, u.a. weil im Rendering keine Information über die im realen Bild beobachteten Grauwertmuster vorliegt.

Dieses Detektionsproblem wird noch schlimmer, wenn dünne bzw. filigrane Strukturen in der jeweiligen Schicht gedruckt werden, weil dann das fehlende Pulver nur mit einer geringen Anzahl von Pixeln sichtbar ist. Dies ergibt sich insbesondere vor dem Hintergrund, dass die räumliche Auflösung von Pulverbettkameras oft recht begrenzt ist.

Die der Erfindung zugrundeliegende Aufgabe ist es daher, eine Lösung anzugeben, die die Nachteile des Standes der Technik überwindet.

Diese Aufgabe wird ausgehend von dem Qualitätsinspektionsverfahren gemäß dem Oberbegriff des Anspruchs 1 sowie durch die Anordnung zur Qualitätsinspektion gemäß Anspruch 10 jeweils durch die kennzeichnenden Merkmale gelöst.

Beim erfindungsgemäßen Qualitätsinspektionsverfahren für ein dreidimensionales Drucken, wie beispielsweise gemäß dem so genanntem "Additiv Manufacturing" Verfahren, bei dem ein dreidimensionales Druckobjekt derart erzeugt wird, dass das Druckobjekt virtuell in Schichten unterteilt wird und sukzessive aufeinanderfolgende Schichten des Druckmodels durch den Drucker derart gedruckt werden, dass

a. hierzu je Schicht gemäß zu druckender virtueller Schicht eine Neubeschichtung mit einem Pulver erfolgt,
b. die Neubeschichtung, insbesondere mit einem Laser, Klebstoff oder Elektronenstrahl, fixiert wird, wird je Schicht
c. mindestens eine erste digitale Bildaufnahme der fixierten Schicht erzeugt wird,
d. mindestens eine zweite digitale Bildaufnahme der Neubeschichtung erzeugt wird,
e. mindestens eine virtuelle Aufteilung der ersten Bildaufnahme und mindestens eine virtuelle Aufteilung der zweiten Bildaufnahme derart erfolgt, dass die erste Bildaufnahme und die zweite Bildaufnahme jeweils derart in Teilflächen unterteilt werden, dass alle Teilflächen je Bildaufnahme zumindest einmal die gesamte Bildaufnahme abdecken, und die erste Aufteilung derart erfolgt, dass eine Teilfläche der ersten Bildaufnahme einer Teilfläche der zweiten Bildaufnahme in Position und Dimension sowie die Summe der Teilflächen der ersten Bildaufnahme der Summe der Teilflächen der zweiten Bildaufnahme entspricht,
f. auf Grundlage einer durch gleiche Position und gleiche Dimension bestimmten Teilfläche der ersten Bildaufnahme und einer durch die gleiche Position und gleiche Dimension bestimmten Teilfläche der zweiten Bildaufnahme eine Untersuchung derart erfolgt, dass sie einer, insbesondere durch maschinelles Lernen unterstützter, Korrelation und Aggregation unterzogen werden.
g. die Korrelation und Aggregation zumindest für jedes sich durch gleiche Position und gleiche Dimension definierende Paar von Teilflächen der ersten Bildaufnahme und der zweiten Bildaufnahme wiederholt wird, wobei die Position jedes weiteren Paares von Teilflächen sukzessive in x- und/oder y-Richtung gemäß eines kartesischen Koordinatensystem verschoben wird,

h. ein Fehlerverfahren eingeleitet wird, wenn ein Defekt zumindest auf der aktuellen Schicht auf Grundlage zumindest einer durchgeführten Korrelation und/oder Aggregation signalisiert wird.

Die Dimension, die in der Regel als die Ausdehnung von Körpern definiert ist, wird dabei im Rahmen dieser Offenbarung so definiert, dass damit die Größe der Teilfläche bezeichnet ist, welche beispielsweise durch eine erste Anzahl von Pixeln in x- und eine zweite Anzahl von Pixeln in y- Richtung gemäß eines kartesischen Koordinatensystems aufgespannt wird.

Das erfindungsgemäße Verfahren hebt sich damit von einem reinen pixelweisen Vergleich von Bildern ab, da durch die Teilfläche gebildete Flächen der Untersuchung zugrunde gelegt werden. Hierdurch führen beispielsweise Helligkeitsunterschiede, die die Grauwerte der aufgenommenen Materialien verfälschen, nicht bzw. in einem wesentlich geringeren Maß zu falschen Untersuchungsergebnissen. Dies wird durch den erfindungsgemäßen Ansatz Paare von Flächen der Aufnahme der mit Pulver beschichteten Schicht und der Aufnahme der, insbesondere durch Laserbelichtung, Elektronenbestrahlung oder Kleben, fixierten Schicht noch verstärkt, denn gemäß erfinderischen Überlegungen bestehen zwischen diesen Schichten Beziehungen, die mit der erfindungsgemäßen Untersuchung beruhend auf Korrelation herausgearbeitet werden können und so u.a. Verfälschungen durch äußere Einflüsse nahezu eliminieren. Gemäß erfinderischer Überlegung wird hierdurch das Bild vor der Beschichtung mit dem Bild nach der Beschichtung verglichen, so dass fehlendes Pulver bei diesem Vorher/Nachher Vergleich grundsätzlich daran erkannt werden kann, dass beide Bilder lokal ähnliche Inhalte zeigen. Dadurch, dass erfindungsgemäß aber nicht nur die Korrelation durchgeführt wird, sondern auch eine Aggregation, wird dies verstärkt und auch akkurater. Erreicht wird dies, da erfindungsgemäß benachbarte Teilflächen der Aufnahmen der fixierten und neubeschichteten Schicht ebenfalls der Korrelation zugeführt werden. Benachbarte Teilflächen haben nach erfindungsgemäßen Überlegungen ebenfalls eine Beziehung zueinander, die durch die Korrelation in Verbindung mit der Aggregation derart herausgearbeitet werden, dass gesichertere Hinweise auf Defekte, wie fehlendes Pulver, liefern können. Diese Hinweise, das heißt die Detektion von Fehlern wird erfindungsgemäß also noch dadurch verbessert, dass hierdurch erfindungsgemäß nicht nur die Korrelation, sondern auch eine Aggregation geschieht. D.h. die Ergebnisse der Korrelationen je Fläche werden in geeigneter Weise einer gesammelten Betrachtung unterworfen, so dass die genannten Beziehungen von Nachbarteilflächen als Fehlerinformation herausgearbeitet werden.

Die erfindungsgemäße Anordnung für die Qualitätsinspektion für ein dreidimensionales Drucken, wie beispielsweise gemäß dem so genanntem "Additiv Manufacturing" Verfahren, bei dem ein dreidimensionales Druckobjekt derart erzeugt wird, dass das Druckobjekt virtuell in Schichten unterteilt wird und sukzessive aufeinanderfolgende Schichten des Druckmodels durch den Drucker derart gedruckt werden, dass

a. hierzu je Schicht gemäß zu druckender virtueller Schicht eine Neubeschichtung mit einem Pulver erfolgt,
b. die Neubeschichtung, insbesondere mit einem Laser, Klebstoff oder Elektronenstrahl, fixiert wird,
weist Mittel zur Durchführung des erfindungsgemäßen Verfahrens auf.

Hierdurch ergibt sich der Vorteil, dass eine Implementierung des erfindungsgemäßen Verfahrens gegeben ist, so dass die Anordnung unter anderem auch die bei dem erfindungsgemäßen Verfahren angegebenen Vorteile aufweist.

Weitere vorteilhafte Ausgestaltungen und Weiterbildungen der Erfindung sind durch die Unteransprüche angegeben.

Bei einer Weiterbildung der Erfindung erfolgt vorzugseiweise die virtuelle Aufteilung der ersten Bildaufnahme und die virtuelle Aufteilung der zweiten Bildaufnahme derart, dass erste Teilflächen gebildet werden, die eine erste Dimension aufweisen und zweite Teilflächen gebildet werden, die eine zweite Dimension aufweisen, wobei die zweite Dimension größer ist als die erste,

a. die Korrelation derart erfolgt, dass für jedes innerhalb eines Paares von zweiten Teilflächen sich befindenden Paares von ersten Teilflächen ein Korrelationskoeffizient gebildet wird, wobei die Position jedes weiteren Paares von Teilflächen sukzessive in x- und/oder y-Richtung gemäß eines kartesischen Koordinatensystem verschoben wird,
b. die Aggregation derart erfolgt, dass je zweite Teilfläche die Summe der Korrelationskoeffizienten über alle innerhalb der zweiten Teilfläche positionierten ersten Paare von ersten Teilflächen gebildet wird,
c. zumindest auf Grundlage eines Vergleichs der Summe mit einem ersten Schwellwert das Fehlerverfahren eingeleitet wird, wenn der Schwellwert überschritten wird.

Die erste Dimension ist dabei im Rahmen dieser Offenbarung als Größe der ersten Teilfläche definiert, die beispielsweise durch die Fläche gegeben ist, die eine Anzahl von Pixeln in x- und y-Richtung aufspannen, während zweite Dimension im Rahmen dieser Offenbarung dabei als Größe der zweiten Teilfläche definiert ist, die beispielsweise durch die Anzahl der ersten Teilflächen in x-Richtung und die Anzahl der ersten Teilflächen in y Richtung gegeben ist, also einer größeren Anzahl von Pixeln in x- und y-Richtung.

Durch die ersten Teilflächen sind also gewissermaßen Zellen definiert, die eine Untermenge von zweiten Teilflächen, die als Blöcke angesehen werden können, bilden, da die zweiten Teilflächen von der Dimension, also der betrachteten Fläche her, größer ist. Für die Untersuchung werden für die Korrelation und Aggregation die Paare der Zellen und die Paare der Blöcke gebildet, wobei die Zellen, weil die Blöcke größer sind innerhalb der Blöcke Schritt für Schritt verschoben werden bis die gesamte zu untersuchende Fläche, welche beispielsweise maximal der Dimension des Blockes entspricht, also der Fläche des Blockes, mindestens einmal zur Untersuchung beigetragen hat. Da die Aufteilung der Zellen, um eine virtuelle Aufteilung handelt, kann die Verschiebung der Zellen (ersten Teilfläche) beispielsweise auch erfolgen bis die gesamte Fläche der Aufnahme zur Untersuchung damit mindestens einmal von einer Zelle abgedeckt worden ist, also die gesamte Fläche zur Korrelation beigetragen hat und im Anschluss hieran die Aufteilung der gesamten Fläche der Aufnahme in Blöcke, die eine bestimmte Anzahl Zellen enthalten, zur Durchführung der Aggregation durchgeführt werden. Die durch die Verschiebung gebildeten neuen Paare gehen also auch in die Untersuchung ein. Diese Aufteilung in Blöcke und Zellen führt auch dazu, dass diese gemäß erfinderischer Überlegung zueinander Beziehungen aufweisen, die durch eine geeignete Korrelation und Aggregation die akkurate Detektion von Fehlern unterstützen. Hierzu wird bei dieser Weiterbildung für jedes Paar der ersten Teilfläche ein Koeffizient gebildet und dieser dann jeweils zum Koeffizienten des durch die verschobene erste Teilfläche (Zellen) gebildeten Koeffizienten innerhalb eines Blockes aufsummiert. Diese Aufsummierung bildet die Aggregation und führt zu einem Gesamtwert, also einer gesammelten Betrachtung, der wenn er einen Schwellwert überschreitet, ein Hinweis auf einen Fehler darstellt. Die Wahl des Schwellwerts erfolgt dabei erfindungsgemäß so, dass dieses Signal akkurat ist.

Hierzu kann dabei bei einer erfindungsgemäßen Weiterbildung beispielsweise durch Erfahrungswerte, Parameter der Umgebung, und/oder, insbesondere durch maschinelles Lernen gestützten, Optimierungsprozedur dieser Wert, zuvor und/oder während des weiteren Betriebs, eingestellt bzw. optimiert werden.

Gemäß einer Weiterbildung des Verfahrens, wird der Korrelationskoeffizient vorzugsweise als so genannter Pearson-Korrelationskoeffizient gebildet. Dieser eignet sich besonders zur Herausarbeitung der Beziehungen und zur Aggregation.

Vorzugsweise wird die Erfindung dabei derart weitergebildet, dass der Pearson-Korrelationskoeffizient nach der Formel

$$r(c^a, c^b) = \frac{\sum k(p_k^a - m^a)(p_k^b - m^b)}{\sqrt{\sum k(p_k^a - m^a)^2 \sum k(p_k^b - m^b)^2}}$$

mit

a = erste Bildaufnahme,
b = zweite Bildaufnahme,
ca = erster Teilfläche ("Zelle") der ersten Bildaufnahme,
cb = erster Teilfläche ("Zelle") der zweiten Bildaufnahme,
pk = die einzelnen Pixelwerte der jeweiligen ersten Teilfläche,
m = den durchschnittlichen Pixelwert der jeweiligen ersten Teilfläche,
k = Laufindex über die Pixelwerte pk der jeweiligen ersten Teilfläche
r E [-1, 1] für jede erste Teilfläche

gebildet wird. Hierdurch ist eine der möglichen Implementierungen der erfinderischen Gedanken in vorteilhafter Weise definiert.

Erfolgt vor der Aggregation eine Normierung des Koeffizienten derart, dass bei Unterschreiten eines zweiten Schwellwerts, insbesondere eines Werts kleiner dem Wert 0.9, der Koeffizient auf den Wert 0 gesetzt wird, ist ein Schwellwert, beispielsweise im Sinne eines optimalen Defaultwertes angegeben und unterstützt somit auch die Implementierung des erfindungsgemäßen Verfahrens bzw. gibt eine mögliche Implementierung des Schwellwertes an.

Wird die Erfindung derart weitergebildet, dass ein Verhältnis von erster Dimension zu zweiter Dimension derart festgelegt wird, dass mindestens zwei erste Teilflächen überlappen, so wird gemäß erfinderischer Überlegung die für die Untersuchung genutzten Beziehungen der Paare von ersten Teilflächen weiter verstärkt, da die benachbarten also durch die Verschiebung der Position erzeugten neuen Paare von Zellen und/oder Blöcken dann nicht mehr disjunkt sind. Vorteilhaft ist hierbei zudem unter anderem, dass die überlappenden Teile, also Flächen, mehrfach der Untersuchung unterworfen werden. Lokal auftretende Störeinflüsse, wie Lichtreflektionen, die die jeweilige Aufnahme, insbesondere die Grauwertstufe der Pixel, verfälschen fallen so unter Umständen bei der nächsten Zelle weg und können einen kaschierten Fehler aufdecken oder eine falsche Fehlermeldung vermeiden, mindestens jedoch durch die gesammelte Übersicht einen Hinweis geben, beispielsweise, da einzelne Werte bei Korrelation und/oder Aggregation stärker oder schwächer sich auswirken.

Eine weitere für die Implementierung vorteilhafte bzw. sie im Sinne eines optimierten Defaultwertes die Implementierung darstellende Weiterbildung ist gegeben, wenn die erste Dimension und zweite Dimension durch Anzahl der Pixel in x- und y-Richtung gemäß einem kartesischen Koordinatensystem definiert sind, das Verhältnis von erster Dimension zu zweiter Dimension derart festgelegt ist, dass mindestens zwei erste Teilflächen für mindestens eine Pixelreihe eine Überlappung aufweisen, insbesondere die erste Dimension durch 3 x 3 Pixel definiert ist und die zweite Dimension durch 5 Teilflächen x 5 Teilflächen definiert ist, wobei dies letztlich auch eine Aufteilung nach Pixeln ist Die Unterteilung nach Pixeln macht insbesondere bei der Betrachtung einer Auflösung der die Bildaufnahmen erstellenden digitalen Kamera Sinn, da diese auch im Bezug zu Pixeln steht und so möglichst einfach optimale Werte, wie Zellen-, Block- und/oder Schwellgrößen, ermittelt werden können. Zudem wird damit die Qualitätsinspektion feingranularer. Insbesondere 3 x 3 Pixel für Zellen und 5 x 5 Zellen (Teilflächen) für die Blöcke, welche die Zellen enthalten, für zu einer Überlappung von zwei Pixelreihen in x-Richtung bei der Verschiebung in x-Richtung zur Bildung folgender "benachbarte" (in Anführungsstrichen, da die die Flächen ja dann nicht mehr disjunkt sind. Die Definition von "benachbart" im Rahmen dieser Offenbarung also auch nichtdisjunkte Zellen umfasst) und zwei Pixelreihen in y-Richtung, und zeigt sich damit als vorteilhafte Wahl, beispielsweise im Sinne eines optimalen Defaultwertes für eine Implementierung, da ein verhältnismäßig großer Bereich überlappt mit unter anderem dem oben genannten Vorteil des Ausgleichs lokal auftretender Störungen.

Gemäß einer Weiterbildung der Erfindung wird das Verhältnis der durch die Anzahl der Pixel definierte ersten Dimension und zweiten Dimension, vorzugsweise derart optimiert festgelegt, dass sie insbesondere die Auflösung einer die ersten und zweiten Bildaufnahmen erstellenden Kamera und/oder andere Parameter des dreidimensionalen Drucks berücksichtigen. Die zuvor genannte Optimierung unter Berücksichtigung der Kameraauflösung wird hiermit gezielt beim Dimensionsverhältnis angewandt und trägt damit zu den oben genannten diesbezüglichen Vorteilen bei.

Bei einer weiteren vorteilhaften Weiterbildung der Erfindung erfolgt die Untersuchung aufgrund von durch zumindest einem ersten Paar von einer ersten Bildaufnahme und einer zweiten Bildaufnahme und einem zweiten Paar von einer ersten Bildaufnahme und einer zweiten Bildaufnahme bestimmten Teilflächen. Hierdurch wird der erfindungsgemäße Ansatz Beziehungen auszunutzen noch weiter verfeinert, da nun nicht nur Paare von Zellen und Blöcke einer aktuellen Schicht betrachtet werden, sondern auch mindestens die Paare einer folgenden Schicht auch, denn diese weisen auch eine Beziehung auf, die durch die erfindungsgemäße Korrelation und Aggregation zum Herausarbeiten von Fehleranzeichen genutzt werden können. Ein Vorteil hiervon kann unter anderem darin, dass wenn man die Ergebnisse der aggregierten Werte des ersten Paares und zweiten Paares aufsummiert, der Wert der Summe ein Zeichen für den Grad des Fehlers sein kann. Also beispielsweise kann ein sehr hoher Wert einen schweren Defekt anzeigen und umgekehrt.

Weitere Vorteile und Details der Erfindung werden anhand der in den Figuren 1 bis 4 dargestellten Ausführungsbeispiele der Erfindung erläutert. Dabei zeigt

FIGUR 1    ein Bild einer Schicht mit mehreren Defekten fehlenden Pulvers, nach einer Neubeschichtung gemäß Stand der Technik, die durch den gelben Kasten markiert sind,

FIGUR 2    Bilder von Schichten wie sie sich nach einer Belichtung gemäß Stand der Technik darstellt,

FIGUR 3    ein Ablaufdiagramm eines Ausführungsbeispiels des erfindungsgemäßen Verfahrens,

FIGUR 4    schematisch Ausführungsbeispiele der erfindungsgemäßen Korrelation und Aggregation,

FIGUR 5    schematische Darstellung von Beispielen einer Fehlererkennung gemäß Ausführungsbeispiel der Erfindung.

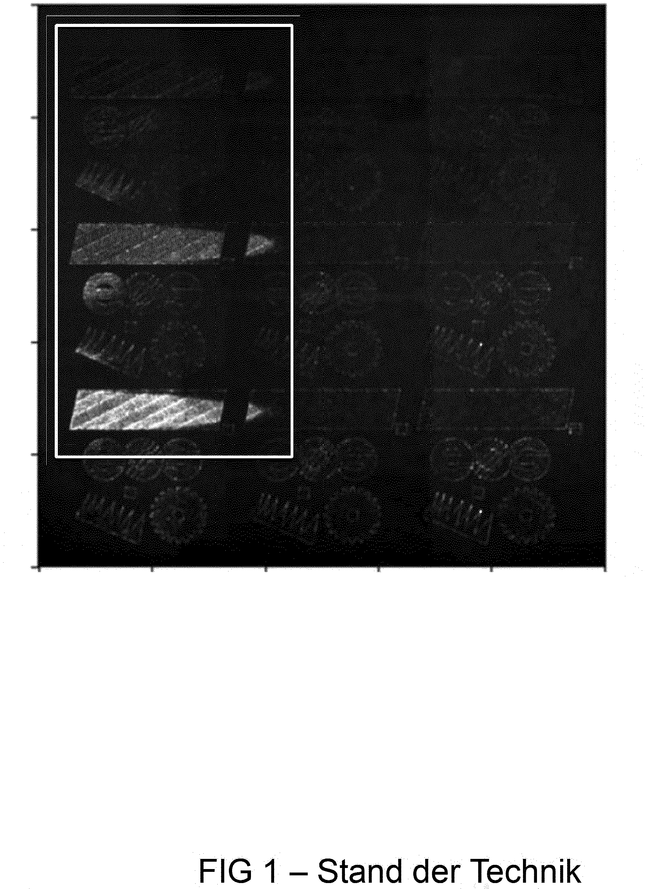

In der FIGUR 1 ist ein Bild der Beschichtung einer Schicht mit Pulver, wie sie beim 3D Druck gemäß Stand der Technik erfolgt ("Nachbeschichtungsbild") einer Schicht mit mehreren Defekten fehlenden Pulvers ("Pulverfehldefekten"), die durch einen Rahmen markiert sind, zu sehen, wie es sich gemäß Stand der Technik zeigt. Zu sehen ist dabei, dass Defekte in der Nähe der oberen linke Ecke aufgrund unterschiedlicher Reflexionsgrade schwer zu erkennen sind, was zu einem sehr geringen Kontrast in diesem Bereich führt.

Bei dem FIGUR 1 gezeigten Beispiel für die Aufnahme einer Neubeschichtung mit Pulver mit mehreren fehlenden Pulverfehldefekten zeigt sich, dass aufgrund der unterschiedlichen Reflexionsgrade, die sich je nach Weg und Beleuchtung der Bilderfassung für die Aufnahme ergeben können wird das blanke Metall, also die Stellen wo das Pulver fehlt, mit sehr unterschiedlichen Grauwerten erfasst, was die Erkennung der Defekte in den kontrastarmen Regionen, wie beispielsweise in der oberen Hälfte des eingerahmten Bereichs in FIGUR 1, erheblich erschwert.

Die Variation von Reflexion und Kontrast zwischen den Schichten entsteht durch unterschiedliche, in der Regel eher zufällige Winkelverschiebungen des Abtastpfades bei der Belichtung, die absichtlich eingeführt werden, um parallele Belichtungslinien zu vermeiden, da dies sonst zu Problemen, wie beispielsweise zur Überhitzung führt.

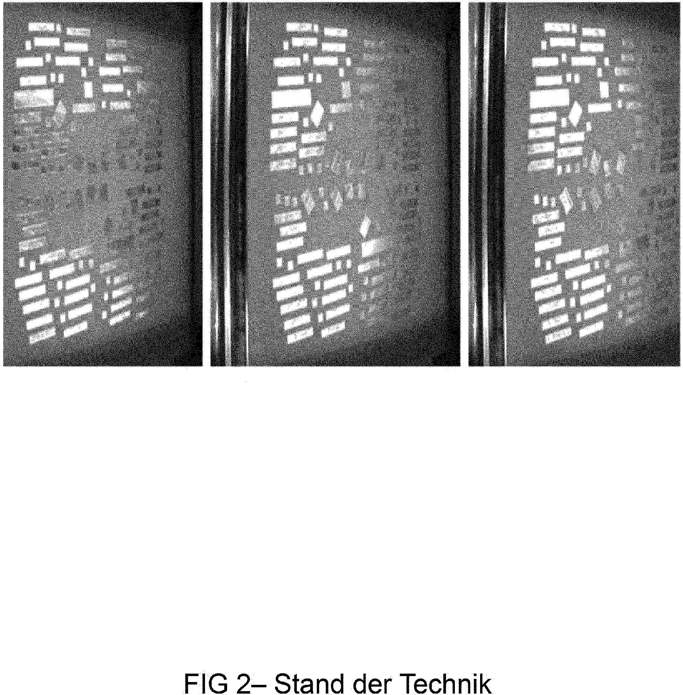

Diese Variationen sind beispielhaft in FIGUR 2 dargestellt.

Die FIGUR 2 zeigt Bilder, die nach der Belichtung ergeben. Nach Belichtung bedeutet im Rahmen dieser Offenbarung, dass ein Laser das Pulver aus der Nachbeschichtung selektiv geschmolzen hat.

Zu sehen sind dabei drei in einem 3D Druck aufeinanderfolgende Schichten, die gemäß Stand der Technik aufgenommen wurden. Hierbei zeigen sich unterschiedliche Grauwerte des geschmolzenen Metalls sowohl innerhalb jedes Bildes als auch zwischen den Bildern.

Die Grauwertvariation ist hauptsächlich durch Unterschiede in der Lichtreflexion verursacht und vermittelt im Allgemeinen keine Informationen über die Prozessqualität. Allerdings macht es die Bildanalyse schwieriger, da die geschmolzenen Bereiche durch sehr unterschiedliche Grauwerte dargestellt werden können, die manchmal sogar von Grauwerten des Pulvers nicht zu unterscheiden sind.

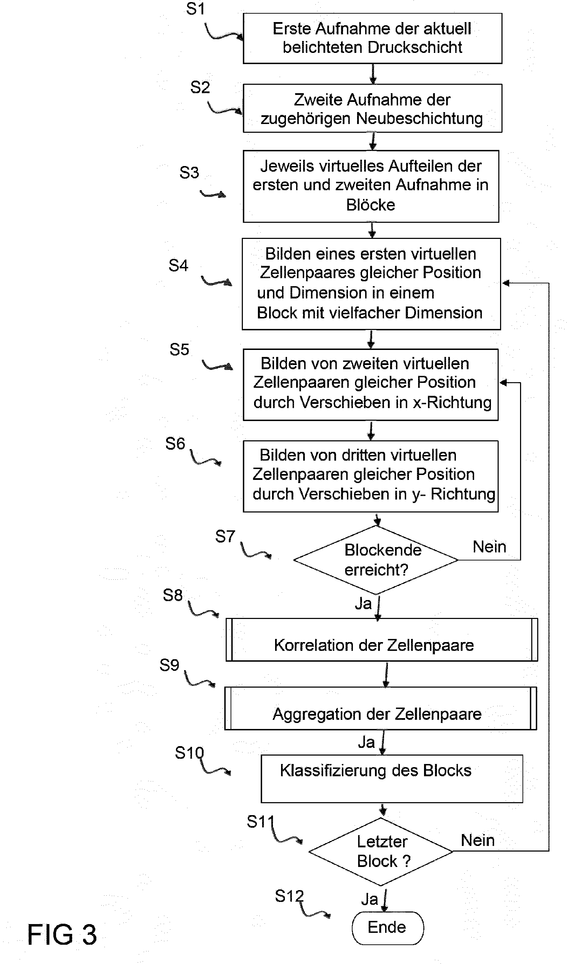

In der FIGUR 3 ist schematisch ein Ablaufdiagramm eines Ausführungsbeispiels des erfindungsgemäßen Verfahrens dargestellt, welcher diesen Herausforderungen begegnet.

Bei dem dargestellten Ausführungsbeispiel erfolgt dabei in einem ersten Schritt S1 eine erste Aufnahme der aktuell fixierten Druckschicht im 3D Drucker. In diesem Beispiel wird die Schicht aus Pulver durch die Belichtung mittels eines Lasers bewirkt. Die Erfindung ist hierauf jedoch nicht beschränkt. Vielmehr kann auch die Anwendung der Erfindung auf alternative Verfahren zum Fixieren erfolgen, wie dem Verfahren, bei dem das Pulver mittels Klebstoffes verbunden wird oder mittels eines Elektronenstrahls fixiert wird.

Hierauf folgt in einem zweiten Schritt S2 eine zweite Aufnahme der Neubeschichtung, die auf die Belichtung folgt.

Somit liegen eine erste und eine zweite digitale Aufnahme vor. Eine vor und eine nach Beschichtung mit dem Pulver. Jede dieser zwei Aufnahmen wird dann in einem dritten Schritt S3 virtuell in Blöcke unterteilt.

Die Aufteilung kann für dieses Beispiel dabei so erfolgen, dass die Gesamtfläche jeder Aufnahme, insbesondere in gleich dimensionierte, beispielsweise aufeinanderfolgende Teilflächen der Fläche der Aufnahme umspannende Rahmen - den Blöcken - derart separiert wird, dass sie eine Teilfläche der Aufnahme, beispielsweise für eine Zuordnung, definieren.

Ferner erfolgt die Aufteilung für die beiden Aufnahmen gleich, so dass ein derart erzeugte Teilfläche der ersten Aufnahme die gleiche Lage, Form und Dimension hat wie die derart erzeugte Teilfläche der zweiten Aufnahme.

In einem vierten Schritt wird S4 dann in jedem Block an einer Ausgangsposition je Aufnahme, also für die erste als auch zweite Aufnahme, eine gleich dimensionierte und positionierte erste Zelle gebildet. Ebenfalls virtuell, wie es in der vormals beschriebenen Art charakterisiert ist.

Ausgehend von diesem vierten Schritt S4 wird dann in einem fünften Schritt S5 eine zweite Zelle je Aufnahme gebildet, diese sind je Aufnahme erfindungsgemäß nicht disjunkt zu den der jeweiligen ersten Zelle. Sie überlappen also mit jeweils mit der Ausgangszelle. Die zweiten Zellen entsprechen dabei von der Dimension und Form her der ersten Zelle, sind aber von der Position her in x-Richtung ein Stück versetzt.

In einem sechsten Schritt S6 wird ebenfalls je Aufnahme ausgehend von der in dem vierten Schritt S4 gebildeten ersten Zelle ein weiteres Zellenpaar gebildet, also eine dritte Zelle je Aufnahme. Diese sind ebenfalls von der Dimension und Form her identisch zur ersten Zelle, aber von der Position her im Bezug zur ersten Zelle in y-Richtung versetzt. Überlappen also ebenfalls die erste Zelle.

Der Überlappungsrad der beiden Versetzungen kann dabei gleich sein, ist aber nicht darauf beschränkt.

In einem siebten Schritt S7 wird nun geprüft, ob nach dem Bilden des zweiten Zellenpaares durch das erste Zellenpaar und die zweiten Zellenpaare sowie dritten Zellenpaare bereits das Blockende erreicht ist; der gesamte Block also virtuell durch ein erstes Zellenpaar und mindestens einem zweiten Zellenpaar sowie mindestens einem dritten Zellenpaar abgedeckt wurde. Ist das nach diesem ersten Versatz nicht der Fall, wird der fünfte Schritt S5, der sechste Schritt S6 sowie der siebte Schritt S7 wiederholt, so dass ein weiteres zweites und drittes Zellenpaar gebildet wird.

Dies erfolgt so lange bis die Abfrage in dem siebten Schritt S7 ergibt, dass der Block abgedeckt ist.

In diesem Beispiel ist die Anzahl der versetzten Zellen in y-Richtung gleich der in x-Richtung. Das Beispiel und die Erfindung sind hierauf nicht beschränkt. Es können unterschiedliche Versatzschritte in die eine und in die andere Richtung erfolgen.

Für das dargestellte Beispiel bedeutet das, dass als eine mögliche Variante entweder das Maß des Versatzes in der x-Richtung anders gewählt werden kann als das Maß in der y-Richtung. Eine weitere Variante besteht aber auch darin, dass die Schritte in einer anderen Reihenfolge und/oder getrennten Schleifen erfolgen kann.

Es gilt generell für das gesamte dargestellte Ausführungsbeispiel, dass das Beispiel und die Erfindung nicht auf genau diese Schrittabfolge und Art der Verfahrensschritte festgelegt sind. Vielmehr sind beliebige Reihenfolgen, Subroutinen-und Schleifenbildungen und Kombinationen aus einzelnen dieser Schritte und Abwandlungen davon, von der Erfindung in den durch die Ansprüche definierten sowie physikalischen (Kausalität) Grenzen umfasst.

Ist also der Block mindestens durch eine Zelle abgedeckt, kann in einem achten Schritt S8 eine erfindungsgemäße Korrelation der Zellenpaare erfolgen. In der Darstellung wird diese Korrelation in einer Subroutine durchgeführt und die Gesamtheit des ersten Zellenpaares sowie der zweiten und dritten Zellenpaare an diese Subroutine übergeben. Die Erfindung ist aber nicht auf diese Implementierungsvariante beschränkt, sondern wie oben angemerkt, kann die Struktur der Implementierung eine gänzlich andere sein. Beispielsweise könnten einzelne Paare an die Subroutine übergeben werden oder es wird nicht mit Subroutinen gearbeitet, sondern durch alternative Implementierungen anders realisiert, dass die Paare korreliert werden.

Nach dieser Korrelation im achten Schritt S8 erfolgt dann erfindungsgemäß in einem neunten Schritt S9 eine Aggregation über die Gesamtheit der Zellenpaare.

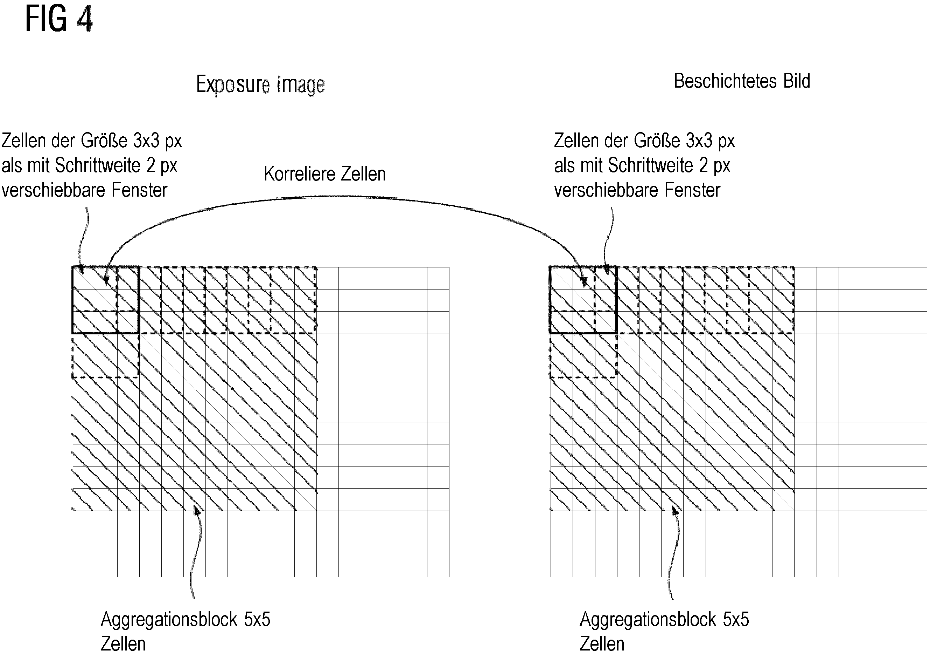

Details zu Aggregation und Korrelation werden ausgehend von der schematischen Darstellung eines Ausführungsbeispiels dieser Prozesse in FIGUR 4 angegeben.

Nach Abschluss dieser Aggregation wird dann eine Klassifizierung des Blocks durchgeführt. Dies ist vereinfachend als ein Schritt dargestellt, könnte jedoch auch als Subroutine implementiert sein, die mit den Ergebnissen der Aggregation aufgerufen wird oder wie oben dargelegt gänzlich andere Implementierungen zur Umsetzung des erfindungsgemäßen Gedankens.

Da ein Block eines - durch die gleiche Dimension, Form und Position auf der ersten und der zweiten Aufnahme, analog zu den Zellenpaaren, logisch zusammengehörigen - Blockpaares jeweils eine Teilfläche der Aufnahmen darstellt, wird es eher die Regel sein, dass eine Abfrage, ob es sich um den letzten Block gehandelt hat, die in einem elften Schritt S11 durchgeführt wird, negativ ausfällt und somit eine Wiederholung der Schritte ab dem vierten Schrittes S4 bis zum zehnten Schritt S10 erfolgt.

Sind nun alle Blöcke klassifiziert und das Ergebnis der Abfrage im elften Schritt S11 positiv, so ist die Untersuchung der beiden Aufnahmen beendet. Dem kann dann eine Ausgabe des Ergebnisses folgen, die anzeigt, ob und/oder welche Fehler beim Druck der aktuellen Schicht aufgetreten sind. Gegebenenfalls wird ein Signal ausgegeben, der Druck gestoppt und/oder Fehlerbehandlungsmöglichkeiten eingeleitet.

Zum besseren Verständnis des erfindungsgemäßen Ausführungsbeispiels soll ausgehend von der in FIGUR 4 gezeigten schematischen Darstellung der Korrelation und Aggregation, diese näher erläutert.

In der linken Hälfte ist das Schema der Korrelation/Aggregation angewandt auf die Aufnahme der belichteten Schicht zu erkennen.

Der Beitrag des Ausführungsbeispiels zur Lösung des der Erfindung zugrundeliegenden Problems besteht in einer geeigneten Korrelation zwischen mindestens zwei Bildern, bei welchem um fehlendes Pulver zu erkennen, ein Bild nach der Belichtung und eines nach der Neubeschichtung aufgenommen werden.

Dabei beruht der erfindungsgemäße Beitrag zur Lösung auf der erfinderischen Idee, dass für den Fall, dass das Pulver fehlt, die lokalen Muster im Nachbeschichtungsbild mit der Belichtungsbild in den Regionen, in denen das Pulver fehlt, hoch korrelieren.

Dabei hebt sich dieser Ansatz zu einem Test der pixelweisen Gleichheit zwischen den Bildern ab, da dieser normalerweise nicht funktionieren kann, es leichte Helligkeitsunterschiede zwischen den Bildern gibt und insbesondere sowohl Metall als auch Pulver lokal je nach Reflexion sehr ähnliche Grauwerte haben können, die zu falschen Ergebnissen bei Vergleichen führen.

Mit einem Ausführungsbeispiel der Erfindung, wie dem in FIGUR 3 beschriebenen, wirkt die Korrelation wie sie in FIGUR 4 schematisch dargestellt ist, wie folgt:

Die Korrelation gemäß Ausführungsbeispiel der Erfindung erfordert, dass Schiebefenster, die vormals beschriebenen Zellen, synchron über die zu vergleichenden Bilder bewegt werden.

Vorteilhaft ist, wenn Zellen eher klein sind, beispielsweise 3 x 3 Pixel oder 5 x 5 Pixel groß, um auch kleine Defekte erfassen zu können. Die optimale Zellgröße wird dabei in Abhängigkeit von der räumlichen Auflösung der digitalen Kamera bestimmt werden und wird dann aber für einen bestimmten Druckertyp in der Regel konstant eingestellt bleiben.

Für jede Zellposition wird dann der Pearson-Korrelationskoeffizient der jeweiligen Probe, also das jeweilige Zellenpaar, wie folgt berechnet

$$r(c^a, c^b) = \frac{\sum_k (p_k^a - m^a)(p_k^b - m^b)}{\sqrt{\sum_k (p_k^a - m^a)^2 \sum_k (p_k^b - m^b)^2}} \qquad (1)$$

wobei *ca, cb* die gleiche Zelle in den Bildern *a* und *b* bezeichnet, *pk* die Pixelwerte der Zelle, und *m* bezeichnet den durchschnittlichen Pixelwert der Zelle.

Der Zähler in Gl. (1) misst die gemeinsame Variation der Pixelwerte der Zelle *pk* um den jeweiliger Zellenmittelwert *m* in der Zelle beider Bilder. Zeigt die Zelle in beiden Bildern den gleiche Variationswert, das heißt ein Pixel ist größer (oder kleiner) als der jeweilige Zellenmittelwert in beiden Bildern, dann ist der Produktterm in der Summe des Zählers positiv. Er ist negativ für einen entgegengesetzte Variation, beispielsweise im Bild *a* ist der Pixelwert größer als der Zellenmittelwert, während das gleiche Pixel in *b* kleiner ist als der Mittelwert. Die Summe läuft dabei über alle Pixel der Zelle.

Der Nenner normalisiert die Summe durch das Produkt der Standardabweichungen der Zellen.

Das Ergebnis dieses Schrittes ist ein Korrelationskoeffizientenwert $r \in [-1, 1]$ für jede Zelle.

Werte nahe +1 zeigen dabei eine hohe Korrelation (Ähnlichkeit) der jeweiligen Zelle in beiden Bildern an.

Die durch das größere Rechteck in den beiden Bildern der Figur schematisch angedeutete Aggregation erfordert gemäß Ausführungsbeispiel der Erfindung nun das Anwenden eines Schwellenwertes auf alle Korrelationskoeffizienten. Hiermit können beispielsweise alle Werte kleiner als 0,9 auf Null gesetzt werden.

Anschließend erfolgt ein Aggregieren resultierenden Werte über benachbarte Zellen. Dies wird erreicht durch die Definition von gleitenden, um ein Pixel überlappenden Zellen, die insgesamt damit mit 5 mal 5 Zellen einen als größeres Rechteck angedeuteten Block ergeben, deren Werte aufsummiert werden.

Ein hoher Summenwert pro Block am Ende dieses Vorgangs weist auf einen Defekt des fehlenden Pulvers in diesem Block hin.

Alternativ oder ergänzend können weitere Kriterien in die Aggregation/Korrelation mit einbezogen werden, beispielsweise eine Anforderung, dass die lokale Varianz pro Zelle mindestens einen konstanten Minimalwert überschreitet. Hierdurch können Fehlkorrelationen zu vermeiden, die beispielsweise aufgrund ähnlicher JPEG-Kompressionsartefakte in beiden Bildern entstehen können, die zwar hinsichtlich Pulverfehlern irrelevant sind, aber lokale Korrelationen beeinflussen können.

Bei einer Weiterbildung der Ausführungsbeispiele zur Verfeinerung der Detektion, können die Ergebnisse über aufeinanderfolgende Schichten bzw. Paaren von ersten und zweiten Aufnahmen hinweg kombiniert werden. Hierdurch kann zum Beispiel, im Fall, dass die dieselbe Blockposition in mindestens zwei aufeinanderfolgenden Schichten hohe Werte zeigt, als Ergebnis festgestellt werden, dass es sich um einen schweren Defekt handelt, während Blöcke, bei denen ein Defekt nur in einer einzigen Schicht auftritt, als weniger schwerwiegend eingestuft werden können.

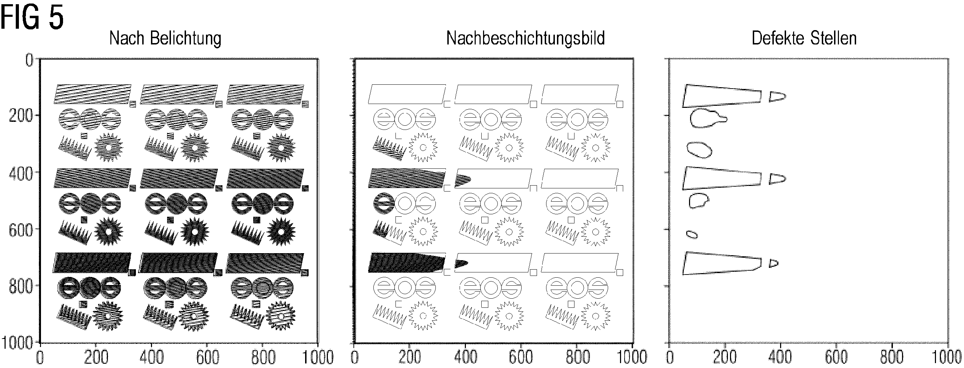

In den die FIGUR 5 bildenden Teilfiguren 5a und 5b sind zwei Beispiele bei Anwendung der erfindungsgemäßen Ausführungsbeispiele erfolgreiche Nachweise von fehlendem Pulver gezeigt, welche also erfolgreich einen Fehler aufzeigen.

Die FIGUR 5a und FIGUR 5b zeigen dabei jeweils schematisch den Ablauf der Detektion gemäß Erfindung für unterschiedliche Druckerzeugnisse. Dabei ist bei den beiden Figuren gleich, dass ganz links die Schicht nach Belichtung gezeigt wird, in der Mitte die Schicht nach Beschichtung mit Pulver und ganz rechts ist das Detektionsergebnis gemäß Ausführungsbeispiel der Erfindung, wie beispielsweise visualisiert werden könnte, um beispielsweise einem Bediener des Druckers bzw. der Druck durchführenden Person auf einem Display gezeigt werden könnte. Dieses Display könnte am Drucker selbst angebracht sein und die Darstellung vor Ort erfolgen oder es erfolgt an einem an einem anderen Ort, beispielsweise an dem Ort wo der Druckauftrag abgegeben wurde, welcher nicht notwendiger Weise dem Standort des Druckers entsprechen muss. Beispielsweise ist es denkbar, dass dies bei der Erzeugung von Einzelstücken, wie beispielweise Prototypen, gegeben ist. Hier wird häufig auf zentrale Druckdienstleistungen zugegriffen. Auch und vor Allem bei so einem einzelnen Auftrag, ist es wünschenswert fehlerhafte Drucke akkurat und frühzeitig zu erkennen.

Zusammenfassend, lassen sich weiter Vorteile, Details und Ausführungsvarianten wie folgt angeben.

Ein wesentlicher durch die Erfindung gegebener Vorteil ergibt sich aus Kombination der Korrelations- und Aggregationsschemata, wie die der in der FIGUR 3 gezeigten Ausführungsbeispiele.

Dies ist vor allem dadurch begründet, dass die Verwendung kleiner Zellen für die Korrelation die Erkennung kleinerer Defekte ermöglicht. Die kleinen Zellen können jedoch auch in gutartigen Fällen, also bei Abwesenheit von Defekten zu hohen Korrelationen führen. Dies kann beispielsweise dann auftreten, wenn geschmolzenes Material einer belichteten Fläche teilweise aus dem Pulver herausragt, so dass es im Neubeschichtungsbild teilweise sichtbar wird.

Durch die erfindungsgemäße Kombination mit der Aggregation, genauer durch die Schwellenwertbildung und Aggregation der Zell-Level-Korrelationen in den größeren Blöcken, die die Korrelationen auf einer größeren räumlichen Fläche darstellen, werden diese Fehlalarme aber eliminiert.

Die erfindungsgemäße Lösung bietet also durch die beschriebene Kombination ein robustes und zugleich eine hohe Empfindlichkeit gegenüber kleinen Defekten aufweisendes Mittel zur Erkennung von Pulverfehldefekten, die eine der kritischsten ist.

Durch die erfindungsgemäße Lösung werden zudem weniger Fehlalarme produziert.

Die Erfindung weist auch eine Invarianz gegenüber lokalen Helligkeitsschwankungen, beispielsweise aufgrund inhomogener Beleuchtung, auf. Dies ergibt sich bei dem in FIGUR 3 diskutierten Ausführungsbeispiel daraus, dass in Gl. (1) der lokale Mittelwert pro Zelle subtrahiert wird, so dass Helligkeitsunterschiede zwischen den Zellen irrelevant sind, da nur die gemeinsame Variation um den jeweiligen Mittelwert zählt.

Die Ausführungsbeispiele der Erfindung zeichnen sich ferner durch gut interpretierbare und leicht abstimmbare Schwellenwerte aus, da die Korrelationskoeffizienten, insbesondere beim Festlegen des Schwellwerts auf 1, die Koeffizienten durch 1,0 begrenzt sind.

Die Erfindung ist dabei auf vorteilhafte Weise sehr gut für eine Implementierung von schnellen Architekturen aus gängigen CNN-Rahmenwerken, wie beispielsweise dem so genannten "Tensorflow", geeignet.

## Patentansprüche

1. Qualitätsinspektionsverfahren für ein dreidimensionales Drucken, wie beispielsweise gemäß dem so genanntem "Additiv Manufacturing" Verfahren, bei dem ein dreidimensionales Druckobjekt derart erzeugt wird, dass das Druckobjekt virtuell in Schichten unterteilt wird und sukzessive aufeinanderfolgende Schichten des Druckmodels durch den Drucker derart gedruckt werden, dass

    a. hierzu je Schicht gemäß zu druckender virtueller Schicht eine Neubeschichtung mit einem Pulver erfolgt,
    b. die Neubeschichtung, insbesondere mit einem Laser, Klebstoff oder Elektronenstrahl, fixiert wird,
    **dadurch gekennzeichnet, dass** je Schicht
    c. mindestens eine erste digitale Bildaufnahme der fixierten Schicht erzeugt wird,
    d. mindestens eine zweite digitale Bildaufnahme der Neubeschichtung erzeugt wird,
    e. mindestens eine virtuelle Aufteilung der ersten Bildaufnahme und mindestens eine virtuelle Aufteilung der zweiten Bildaufnahme derart erfolgt, dass die erste Bildaufnahme und die zweite Bildaufnahme jeweils derart in Teilflächen unterteilt werden, dass alle Teilflächen je Bildaufnahme zumindest einmal die gesamte Bildaufnahme abdecken, und die erste Aufteilung derart erfolgt, dass eine Teilfläche der ersten Bildaufnahme einer Teilfläche der zweiten Bildaufnahme in Position und Dimension sowie die Summe der Teilfläche der ersten Bildaufnahme der Summe der Teilfläche der zweiten Bildaufnahme entspricht,
    f. auf Grundlage einer durch gleiche Position und gleiche Dimension bestimmten Teilfläche der ersten Bildaufnahme und einer durch die gleiche Position und gleiche Dimension bestimmten Teilfläche der zweiten Bildaufnahme eine Untersuchung derart erfolgt, dass sie einer, insbesondere durch maschinelles Lernen unterstützter, Korrelation und Aggregation unterzogen werden.
    g. die Korrelation und Aggregation zumindest für jedes sich durch gleiche Position und gleiche Dimension definierende Paar von Teilflächen der ersten Bildaufnahme und der zweiten Bildaufnahme wiederholt wird, wobei die Position jedes weiteren Paares von Teilflächen sukzessive in x- und/oder y-Richtung gemäß eines kartesischen Koordinatensystem verschoben wird,
    h. ein Fehlerverfahren eingeleitet wird, wenn ein Defekt zumindest auf der aktuellen Schicht auf Grundlage zumindest einer durchgeführten Korrelation und/oder Aggregation signalisiert wird.

2. Verfahren nach dem vorhergehenden Anspruch, **dadurch gekennzeichnet, dass**

    a. die virtuelle Aufteilung der ersten Bildaufnahme und die virtuelle Aufteilung der zweiten Bildaufnahme derart erfolgt, dass erste Teilflächen gebildet werden, die eine erste Dimension aufweisen und zweite Teilflächen gebildet wird, die eine zweite Dimension aufweisen, wobei die zweite Dimension größer ist als die erste,
    b. die Korrelation derart erfolgt, dass für jedes innerhalb eines Paares von zweiten Teilflächen sich befindenden Paares von ersten Teilflächen ein Korrelationskoeffizient gebildet wird, wobei die Position jedes weiteren Paares von Teilflächen sukzessive in x- und/oder y-Richtung gemäß eines kartesischen Koordinatensystem verschoben wird,
    c. die Aggregation derart erfolgt, dass je zweiten Teilfläche die Summe der Korrelationskoeffizienten über alle innerhalb der zweiten Teilfläche positionierte ersten Paare von ersten Teilflächen gebildet wird,
    d. zumindest auf Grundlage eines Vergleichs der Summe mit einem ersten Schwellwert das Fehlerverfahren eingeleitet wird, wenn der Schwellwert überschritten wird.

3. Verfahren nach dem vorhergehenden Anspruch, **dadurch gekennzeichnet, dass** der Korrelationskoeffizient als so genannter Pearson-Korrelationskoeffizient gebildet wird.

4. Verfahren nach dem vorhergehenden Anspruch, **dadurch gekennzeichnet, dass** Pearson-Korrelationskoeffizient nach der Formel

$$r(c^a, c^b) = \frac{\sum k(p_k^a - m^a)(p_k^b - m^b)}{\sqrt{\sum k(p_k^a - m^a)^2 \sum k(p_k^b - m^b)^2}}$$

mit

$a$ = erste Bildaufnahme,
$b$ = zweite Bildaufnahme,
$ca$ = erste Teilfläche der ersten Bildaufnahme,
$cb$ = erster Teilfläche der zweiten Bildaufnahme,
$pk$ = die einzelnen Pixelwerte der jeweiligen ersten Teilfläche,
$m$ = den durchschnittlichen Pixelwert der jeweiligen ersten Teilfläche,
k = Laufindex über die Pixelwerte $pk$ der jeweiligen ersten Teilfläche
r E [-1, 1] für jede erste Teilfläche gebildet wird.

5. Verfahren nach einem der vorhergehenden Ansprüche, **dadurch gekennzeichnet, dass** vor der Aggregation eine Normierung des Koeffizienten, derart erfolgt, dass bei Unterschreiten eines zweiten Schwellwerts, insbesondere eines Werts kleiner dem Wert 0,9, der Koeffizient auf den Wert 0 gesetzt wird.

6. Verfahren nach einem der vorhergehenden Ansprüche, **dadurch gekennzeichnet, dass** ein Verhältnis von erster Dimension zu zweiter Dimension derart festgelegt wird, dass mindestens zwei erste Teilflächen überlappen.

7. Verfahren nach dem vorhergehend Anspruch, **dadurch gekennzeichnet, dass** die erste Dimension und zweite Dimension durch Anzahl der Pixel in x- und y- Richtung gemäß einem kartesischen Koordinatensystem definiert sind, das Verhältnis von erster Dimension zu zweiter Dimension derart festgelegt ist, dass mindestens zwei erste Teilflächen für mindestens eine Pixelreihe eine Überlappung aufweisen, insbesondere die erste Dimension durch 3 x 3 Pixel definiert ist und die zweite Dimension durch 5 x 5 Teilflächen definiert ist.

8. Verfahren nach dem vorhergehenden Anspruch, **dadurch gekennzeichnet, dass** das Verhältnis der durch die Anzahl der Pixel definierte ersten Dimension und zweiten Dimension, vorzugsweise derart optimiert festgelegt wird, dass sie insbesondere die Auflösung einer die ersten und zweiten Bildaufnahmen erstellenden Kamera und/oder andere Parameter des dreidimensionalen Drucks berücksichtigen.

9. Verfahren nach einem der vorhergehenden Ansprüche, **dadurch gekennzeichnet, dass** die Untersuchung aufgrund von durch zumindest einem ersten Paar von einer ersten Bildaufnahme und einer zweiten Bildaufnahme und einem zweiten Paar von einer ersten Bildaufnahme und einer zweiten Bildaufnahme bestimmten Teilflächen erfolgt.

10. Anordnung für die Qualitätsinspektion für ein dreidimensionales Drucken, wie beispielsweise gemäß dem so genanntem "Additiv Manufacturing" Verfahren, bei dem ein dreidimensionales Druckobjekt derart erzeugt wird, dass das Druckobjekt virtuell in Schichten unterteilt wird und sukzessive aufeinanderfolgende Schichten des Druckmodels durch den Drucker derart gedruckt werden, dass

a. hierzu je Schicht gemäß zu druckender virtueller Schicht eine Neubeschichtung mit einem Pulver erfolgt,
b. die Neubeschichtung, insbesondere mit einem Laser, Klebstoff oder Elektronenstrahl, fixiert wird, **gekennzeichnet durch** Mittel zur Durchführung des Verfahrens nach einem der vorhergehenden Ansprüche.

FIG 1 – Stand der Technik

FIG 2– Stand der Technik

S1 — Erste Aufnahme der aktuell belichteten Druckschicht

S2 — Zweite Aufnahme der zugehörigen Neubeschichtung

S3 — Jeweils virtuelles Aufteilen der ersten und zweiten Aufnahme in Blöcke

S4 — Bilden eines ersten virtuellen Zellenpaares gleicher Position und Dimension in einem Block mit vielfacher Dimension

S5 — Bilden von zweiten virtuellen Zellenpaaren gleicher Position durch Verschieben in x-Richtung

S6 — Bilden von dritten virtuellen Zellenpaaren gleicher Position durch Verschieben in y- Richtung

S7 — Blockende erreicht? — Nein

Ja

S8 — Korrelation der Zellenpaare

S9 — Aggregation der Zellenpaare

Ja

S10 — Klassifizierung des Blocks

S11 — Letzter Block ? — Nein

S12 — Ja — Ende

FIG 3

14

# FIG 4

Exposure image

Beschichtetes Bild

Zellen der Größe 3x3 px
als mit Schrittweite 2 px
verschiebbare Fenster

Korreliere Zellen

Zellen der Größe 3x3 px
als mit Schrittweite 2 px
verschiebbare Fenster

Aggregationsblock 5x5
Zellen

Aggregationsblock 5x5
Zellen

EP 3 961 557 A1

# FIG 5

Nach Belichtung

Nachbeschichtungsbild

Defekte Stellen

EP 3 961 557 A1

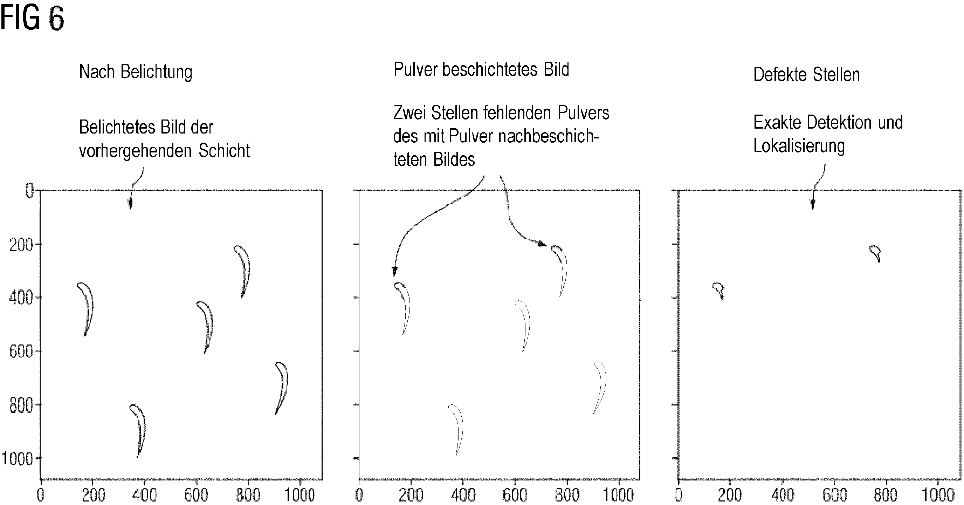

## FIG 6

Nach Belichtung

Belichtetes Bild der
vorhergehenden Schicht

Pulver beschichtetes Bild

Zwei Stellen fehlenden Pulvers
des mit Pulver nachbeschichteten Bildes

Defekte Stellen

Exakte Detektion und
Lokalisierung

EP 3 961 557 A1

**Europäisches Patentamt**
**European Patent Office**
**Office européen des brevets**

# EUROPÄISCHER RECHERCHENBERICHT

Nummer der Anmeldung

EP 20 19 2906

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2018/322621 A1 (CRAEGHS TOM [BE] ET AL) 8. November 2018 (2018-11-08) | 1,6-10 | INV.<br>G06T7/00 |
| A | * Zusammenfassung *<br>* Absatz [0034] *<br>* Absatz [0056] - Absatz [0058] *<br>* Absatz [0071] - Absatz [0072] * | 2-5 | B22F10/85<br>B29C64/393<br>B33Y50/02 |
| A | US 2016/046077 A1 (YADROITSAU LHAR [ZA]) 18. Februar 2016 (2016-02-18)<br>* Zusammenfassung *<br>* Abbildung 9 * | 1,10 | |
| Y | WO 2020/157249 A1 (ZEISS CARL SMT GMBH [DE]) 6. August 2020 (2020-08-06)<br>* Seite 1, Zeile 8 - Zeile 11 *<br>* Seite 5, Zeile 15 - Zeile 20 *<br>* Seite 7, Zeile 28 - Zeile 33 *<br>* Seite 8, Zeile 7 - Zeile 8 *<br>* Seite 10, Zeile 27 - Seite 11, Zeile 2 *<br>* Seite 16, Zeile 13 - Zeile 14 *<br>* Seite 17, Zeile 5 *<br>* Seite 30, Zeile 25 - Zeile 31 *<br>* Abbildung 5 * | 1,6-10 | |
| Y | US 9 390 494 B2 (KLA TENCOR CORP [US]) 12. Juli 2016 (2016-07-12)<br>* Zusammenfassung * | 1,10 | |
| Y | US 2015/078627 A1 (FUKASE TAKAHIRO [JP]) 19. März 2015 (2015-03-19)<br>* Anspruch 1 * | 1,10 | |

RECHERCHIERTE SACHGEBIETE (IPC)

G06T
B29C
B33Y
B22F

Der vorliegende Recherchenbericht wurde für alle Patentansprüche erstellt

| Recherchenort | Abschlußdatum der Recherche | Prüfer |
|---|---|---|
| München | 4. Februar 2021 | Engels, Angela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 2906

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2021

| Im Recherchenbericht angeführtes Patentdokument | Datum der Veröffentlichung | Mitglied(er) der Patentfamilie | Datum der Veröffentlichung |
|---|---|---|---|
| US 2018322621 A1 | 08-11-2018 | CN 108463838 A<br>EP 3378039 A1<br>JP 2018538167 A<br>KR 20180082492 A<br>US 2018322621 A1<br>WO 2017087451 A1 | 28-08-2018<br>26-09-2018<br>27-12-2018<br>18-07-2018<br>08-11-2018<br>26-05-2017 |
| US 2016046077 A1 | 18-02-2016 | US 2016046077 A1<br>ZA 201505683 B | 18-02-2016<br>29-11-2017 |
| WO 2020157249 A1 | 06-08-2020 | DE 102019102484 A1<br>WO 2020157249 A1 | 06-08-2020<br>06-08-2020 |
| US 9390494 B2 | 12-07-2016 | TW 201432372 A<br>US 2014168418 A1<br>WO 2014093732 A2 | 16-08-2014<br>19-06-2014<br>19-06-2014 |
| US 2015078627 A1 | 19-03-2015 | JP 6295561 B2<br>JP 2015059744 A<br>US 2015078627 A1 | 20-03-2018<br>30-03-2015<br>19-03-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 3459715 A1

- WO 2015020939 A1

**In der Beschreibung aufgeführte Nicht-Patentliteratur**

- **LUKE SCIME ; JACK BEUTH.** Anomaly detection and classification in a laser powder bed additive manufacturing process using a trained computer vision algorithm. *Additive Manufacturing,* 2018, vol. 19, ISSN 2214-8604, 114-126